# EUROPEAN PATENT SPECIFICATION

(11) **EP 0 706 247 B1**
(45) Date of publication and mention of the grant of the patent: **29.07.1998**
(21) Application number: 94610046.8
(22) Date of filing: 06.10.1994
(51) Int. Cl.: H02B 1/06, H02G 3/14

(54) **A modular system for cover frames**
Modulares System für Deckelrahmen
Système modulaire pour couvercles électriques

(43) Date of publication of application: 10.04.1996
(73) Proprietor: LK A/S, DK-2750 Ballerup (DK)
(72) Inventor: Madsen, Kaj Fischer, DK-2950 Vedbaek (DK)
(74) Representative: Larsen, Anna

(56) References cited:
- DE-A- 1 465 268
- DE-A- 2 452 173
- DE-A- 3 129 061
- FR-A- 2 640 419

## Description

The present invention relates to a modular system for cover frames to be mounted about adjoining boxes for mains switches and mains outlets, wherein a rectangular cover frame is used, dimensioned to enclose a box for a mains switch or a mains outlet.

Cover frames (escutcheon plates) are mounted on the front face of the completely installed and electrically connected switch, outlet or the like arranged in a mounting box in a wall or in a cable duct, and the purposes of the cover frame include covering and thereby protecting the electric installation and forming a transition from wall to switch. Moreover, for aesthetic reasons, the design of the cover frame should fit in with the surroundings.

Cover frames for mains switches and mains outlets are obtainable in many different designs. In a typical electric installation one, two, three or four switches and outlets are needed arranged side by side or one above the other. Prior art switches are enclosed by single cover frames, double, triple or quadruple cover frames, respectively (also named combination frames). Expensive tools are needed for the manufacture of each type of frame and it is therefore of considerable economic advantage to limit the number of different frame types.

Norwegian publication No. 151.989 discloses how to limit the number of combination frames by forming a dismountable separation member which can divide a combination frame in many different ways and thereby make room for inserts of various kinds. Consequently, the number of different frame embodiments is limited to a certain extent, but frames of different lengths still have to be manufactured.

Furthermore, a modular cover frame system is known, forming combination frames by combining a plurality of I-shaped intermediaries and two end sections being essentially U-shaped and provided with rectangular corners.

DE-A-3129061 discloses a rectangular cover frame for mounting around a socket. The cover frame includes outer edge portions which form bars which can be separated from the rest of the frame.

To some extent, the structure and dimensioning of electric devices is determined by a number of standards, regulations, and market-related demands to electric installations. It is, thus, required that the cover frame about boxes for mains switches and mains outlets measures at least 80 x 80 mm for a single switch. Moreover, it is restricted how closely interspaced an alignment of switches or outlets may be. According to the basic standards in a number of countries, the minimum centre distance (i.e. the distance centre to centre) between boxes for mains switches and mains outlets should be at least 71 mm, while a centre distance of 57 mm is used in some other countries.

The object of the invention is to provide a modular system making it possible to manufacture a single cover frame instead of a number of variants, thus, rendering the manufacture of combination frames superfluous. The cover frame should be usable for both the above centre distances of 71 mm and 57 mm.

This object is obtained by a modular system of cover frames for mounting about adjoining boxes for mains switches and mains outlets or the like, wherein each cover frame is substantially rectangular and dimensioned to enclose the box and is provided with opposing outer edge portions, forming at least one bar which may be separated from the remaining cover frame to enable two cover frames to be arranged adjacently, wherein each cover frame is an escutcheon plate and has an opening suitable for receiving a switch key such that each cover frame is capable of being mounted on the front face of a completely installed and electrically connected mains switch, mains outlet or the like.

A particular advantage is that it is possible to mount an arbitrary number of cover frames about an alignment of boxes for mains switches and mains outlets being mounted with a given centre distance by separating and removing a "bar" or in other words, an edge portion at the side edge of the cover frames adjacent a succeeding cover frame, as it will be evident from the subsequent detailed description.

Furthermore, it has proved particularly advantageous to use a square cover frame having a side length of 85 mm with the above standard centre distances of 57 mm and 71 mm, respectively, as a number of bars of width of 7 mm or possibly 14 mm allows compensation for the difference in dimensions. The cover frame according to the invention, thus, complies with the European as well as certain national standard demands to the distance between boxes for mains switches and mains outlets.

The invention is described in greater detail in the following with reference to the particularly preferred embodiments and accompanying drawings, in which
Figure 1 shows an example of a preferred embodiment of a cover frame according to the invention,
Figure 2 shows a second example of a preferred embodiment of a cover frame according to the invention,
Figures 3 to 5 shows an alignment of adjacently mounted cover frames in various embodiments according to the invention for complying with various standards,
Figure 6 and Figure 7 show two examples of cover frames as shown in Figure 1 mounted in a vertical arrangement, as it is typically in homes,
Figure 8 is a sectional view through a cover frame as shown in Figure 1,
Figure 9 is a sectional view through a second embodiment of a cover frame as shown in Figure 1,
Figure 10 is an enlarged, sectional view through an example of an embodiment of a groove in a cover frame,
Figure 11 shows a third embodiment of a cover frame according to the invention, and
Figure 12 to 16 illustrate a fourth embodiment of a cover frame (escutcheon plate) according to the invention as well as some combination possibilities.

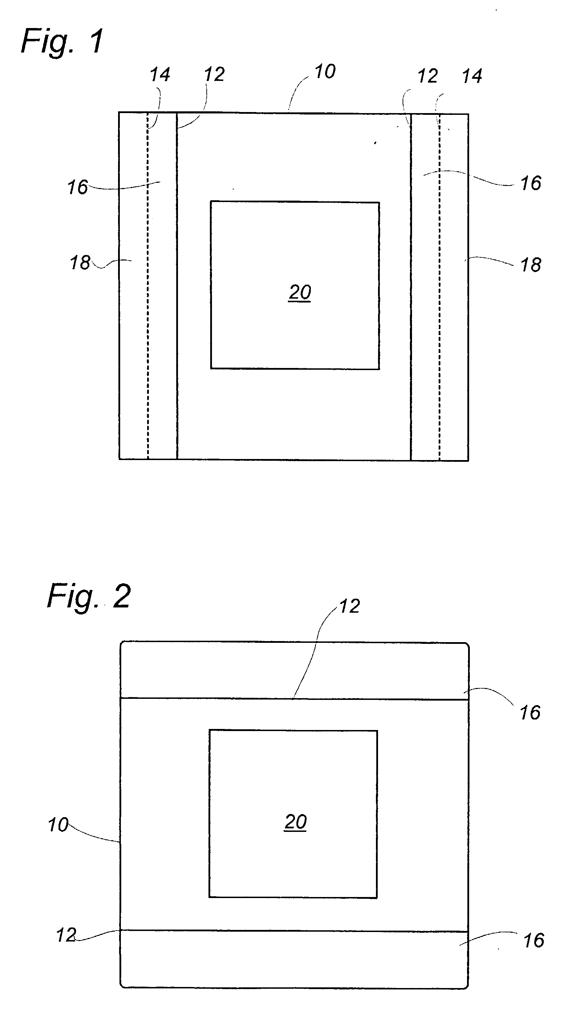

The cover frame shown in Figure 1 comprises a cover plate, (hereinafter called "frame"), 10 which is essentially square and measures 85 mm by 85 mm in a particularly advantageous embodiment. The frame encloses an essentially square opening or notch 20, which may receive a switch key on a switch mounted in a mounting box or in a cable duct. In a well-known manner, e.g. by means of clip-on means, the frame is intended to be mounted on the front of the completely mounted and electrically connected switch or outlet.

A deep groove 12 is provided along both side edges, and as indicated by means of the dotted line 14, possibly two additional grooves make it easy for an electrician to remove one or two (or more, if necessary) of the outer edge portions 16, 18, (hereinafter called "bars"). As a result, two cover frames 10 may be arranged adjacently about two boxes for mains switches and mains outlets mounted with a centre distance of 71 mm according to the CEE standard or with the centre distance of 57 mm used in some countries, such as France.

Figure 2 illustrates a second embodiment in principle being essentially identical to the embodiment shown in Figure 1 except for the rounded corners. In a preferred embodiment, two grooves 12 are formed along the upper and lower edge and preferably spaced 14 mm therefrom, each said grooves defining a bar 16 intended to be separated (e.g. broken off) from the remaining cover frame.

In other embodiments of the cover frame, for instance two, three or four bars may be provided at each edge, said bar having a width of e.g. 3.5 mm, 7 and/or 14 mm.

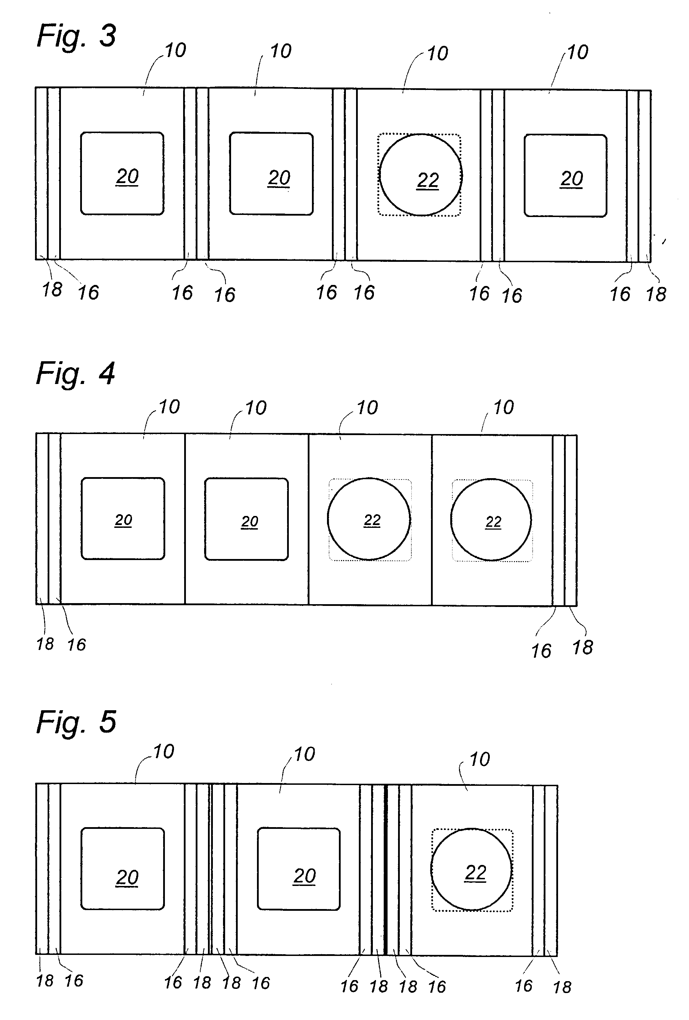

Figure 3 shows an example of an alignment of switches provided with switch keys 20 and plug outlets provided with outlet taps 22 having four frames 10 mounted so that the centre distance between two adjacent switches or outlets is 71 mm. When using four cover frames as shown in Figure 1, measuring 85 mm by 85 mm and a bar of 7 mm, a bar has to be broken off both frame sides, where a cover frame 10 adjoins another cover frame, as shown in Figure 3. When using a cover frame as shown in Figure 2 having a bar of 14 mm, only one bar of the frame side adjacent another cover frame 19 is to be broken off. It should be stressed that the frame shown in Figure 2 preferably has a square section 20, whereby it can be turned, as shown in Figure 1 and in Figure 2.

When using the same cover frame having a bar of 7 mm at locations using a centre distance of 57 mm as standard between two switches, two bars are broken off from both frame sides, where a cover frame 10 adjoins another cover frame, as shown in Figure 4. In the embodiment having a bar of 14 mm, one bar is broken off from both frame sides, where a cover frame 10 adjoins another cover frame.

Naturally, the standard frame shown in Figure 1 may also be used as shown in Figure 5, in which three standard frames are mounted in alignment and no bars are broken off, i.e. having a centre distance of 85 mm.

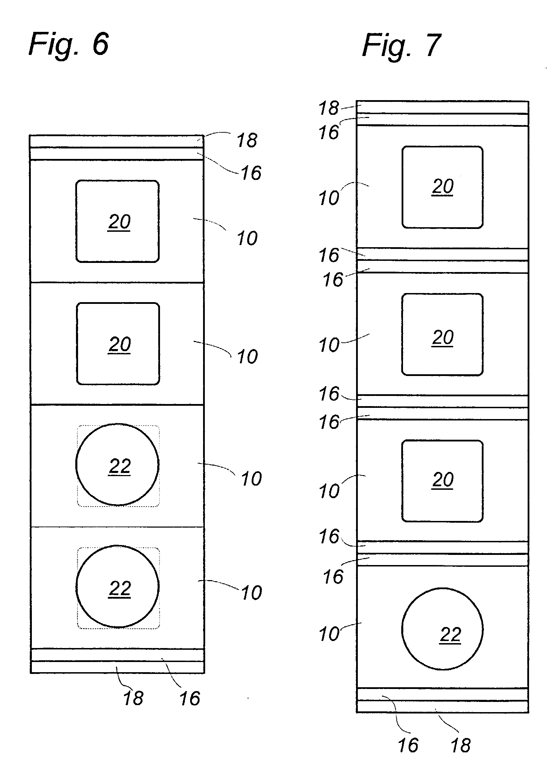

In Figures 6 and 7, corresponding examples of four frames of the type shown in Figure 1 are arranged one above the other with a centre distance of 57 mm and 71 mm, respectively. The embodiments shown in Figures 2, 6, and 7 are preferably used for wiring in homes, while the embodiment shown in Figures 1, 3, 4, and 5 are intended for offices, in particular. Provided the cover frame 10 as shown in Figures 1 and 2 is formed with a square section 20, the same frame may be used for mounting as shown in Figures 3, 4, and 5 as well as for vertical mounting as shown in Figures 6 and 7.

In a preferred embodiment, the complete cover frame 10 with the bars is formed all in one piece, for instance by moulding or compression moulding. If desired, the moulding can be carried out in two steps with two different plastics materials to enable a subsequent separation of one or more bars. One or more grooves may be formed simultaneously during moulding, said grooves defining the line(s) of separation, and preferably being so deep that it is easy for the electrician to remove one or more bars, preferably without using any tools. However, it is within the scope of the invention to use tools to a small extent, such as a knife for separating the bars from the cover frame 10.

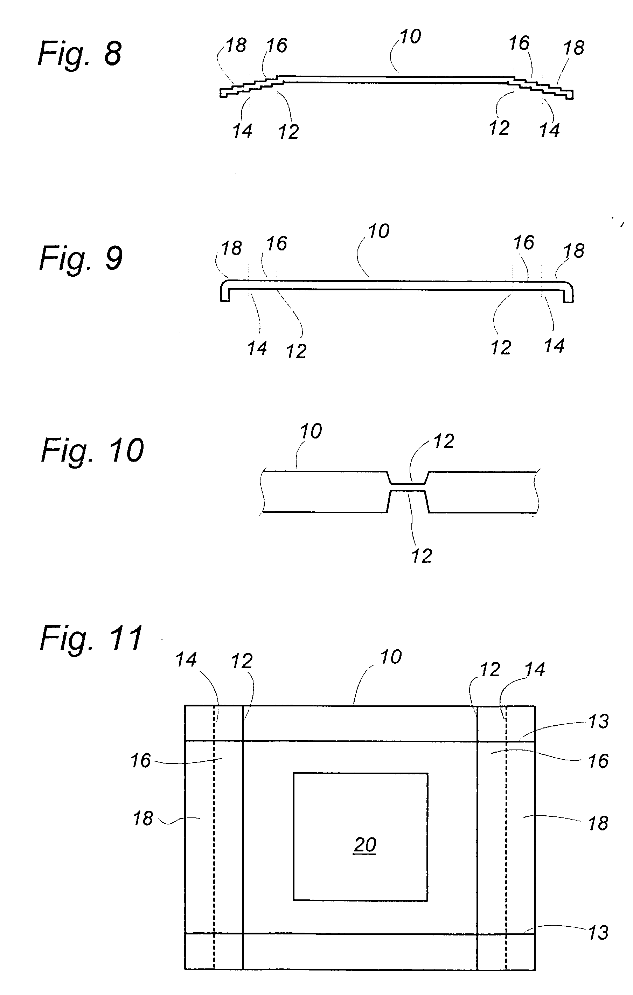

Figure 8 and 9 are sectional views through examples of two typical embodiments of the cover frame. The grooves 12, 14 are merely indicated by means of thin, dotted lines. Figure 8 illustrates an example of an embodiment provided with a stepped bar. The upper face of the cover frame may have many different geometrical shapes. However, except for the grooves 12, 14, it is essentially plane, possibly slightly curved in horizontal and/or in vertical direction, when arranged on a vertical wall, or slightly pyramidal, and normally having an essentially smooth, matt or shiny surface being easy to keep clean.

The groove may be shaped as a continuous, deep groove, and if desired, may be completely or partially filled with a filling material, such as a soft plastics which do not hinder the separation. The groove may also be composed of a line of perforations.

As shown on the Figure, the groove may be formed on the front, and completely filled, or covered by a trim strip. It is within the scope of the invention to form the groove on the back of the cover frame, whereby the front has a smooth surface regardless of the number of remaining bars. In cross-section, the groove may likewise be shaped in different ways, for instance V-shaped or with essentially vertical side and a horizontal or curved bottom. In yet another embodiment, the grooves 12 are formed on the front as well as on the back of the standard frame. An enlarged section thereof being shown in Figure 10,. As a result, a comparatively small, aesthetically designed groove may be provided on the front, the depth thereof being such that said groove may cover any flashes after a bar has been broken off. A deeper groove may be provided on the back to ensure easy separation.

In another embodiment, the cover frame and the bars are manufactured individually, whereafter the sections are assembled at the factory with suitable means, such as clip-on means intended therefor, by adhesion or by moulding in such a manner that a subsequent separation may be performed, when the cover frame is mounted on the site of application.

Figure 11 shows yet another embodiment of the cover frame having a square opening 20, the cover plate with bar being rectangular (non-squared) and provided with grooves 12,13,14 along each side edge. As the cover frame with the square opening can be turned 90°, the cover frame can be adapted to comply with several different demands as to the centre distances between adjacent switches and outlets by choosing suitable bar widths.

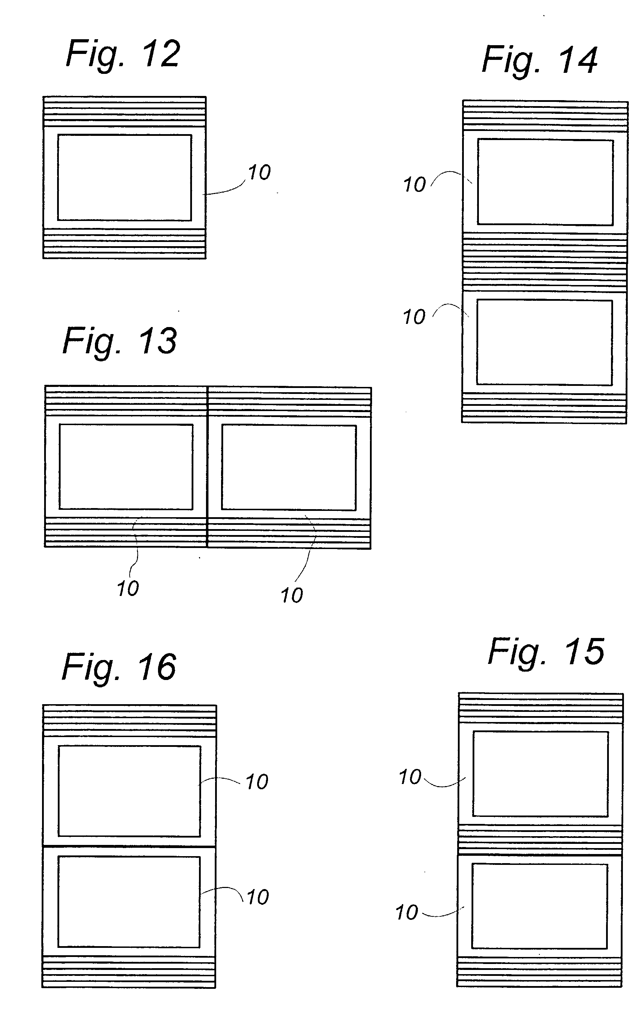

Finally, Figure 12 shows an example of an embodiment provided with a stepped bar being 14 mm wide along the upper and lower edges of the cover frame, and a rectangular opening for a switch key. Figure 13 is an example of two cover frames of Figure 12 arranged side by side. Figures 14, 15, and 16 show examples of two cover frames arranged one above the other at a centre distance of 85 mm, 71 mm, and 57 mm, respectively.

It is evident the invention may be varied in many ways with the scope of the attached claims. The number and width(s) of the bar(s) formed by means of grooves along one or more of the side edges for separation from the rest of the cover frame may be altered. Moreover, the cover frame 10 may be rectangular as well as square and provided with a rectangular as well as a square opening 20.

## Claims

1. A modular system of cover frames (10) for mounting about adjoining boxes for mains switches and mains outlets or the like, wherein each cover frame is substantially rectangular and dimensioned to enclose the box and is provided with opposing outer edge portions, forming at least one bar (16,18) which may be separated from the remaining cover frame to enable two cover frames (10) to be arranged adjacently, characterised in that each cover frame (10) is an escutcheon plate and has an opening (20) suitable for receiving a switch key such that each cover frame (10) is capable of being mounted on the front face of a completely installed and electrically connected mains switch, mains outlet or the like.

2. A modular system according to claim 1, wherein the cover frame is provided with opposing side sections, each section forming at least one bar (16,18) separable from the remaining cover frame, and/or that the cover frame is provided with upper and lower edge portions, each forming at least one bar (16,18) separable from the remaining cover frame.

3. A modular system according to claim 1 or 2, wherein the cover frame opening (20) is square.

4. A modular system according to one or more of the preceding claims, wherein the cover frame is provided with grooves (12,14) indicating the lines of separation between the detachable bars (16,18) and the remaining cover frame.

5. A modular system according to claim 4, wherein the depth of the grooves and the remaining wall thickness allow the bars (16,18) to be broken off without using any tools.

6. A modular system according to claim 4, wherein the grooves (12,14) are formed on the front and/or on the back of the cover frame.

7. A modular system according to one or more of the preceding claims, wherein the cover frame is square.

8. A modular system according to one or more of the preceding claims, wherein the cover frame and the bars (16,18) are moulded or pressed as an integrated piece.

9. A modular system according to one or more of the preceding claims, wherein the bars and remaining part of the cover frame is moulded or pressed as separate parts.

10. A modular system according to one or more of the preceding claims, wherein the cover frame including the bars (16,18) is 85 mm long and that each separable bar (16,18) is 7 mm or 14 mm long.

## Patentansprüche

1. Modulares System für Deckelrahmen (10) zur Montage über nebeneinanderliegenden Dosen für Netzschalter und Netzsteckdosen oder dergleichen, wobei jeder Rahmendeckel im wesentlichen rechteckig und so dimensioniert ist, daß er die Dose umschließt und mit gegenüberliegenden Außenrandabschnitten versehen ist, die wenigstens einen Stab (16, 18) bilden, welcher von dem restlichen Rahmendeckel abgetrennt werden kann, um das Anordnen von zwei Rahmendeckeln (10) aneinander angrenzend zu ermöglichen, dadurch gekennzeichnet, daß der Rahmendeckel (10) eine Abdeckplatte ist und eine Öffnung (20) aufweist, die für die Aufnahme einer Schaltertaste in der Weise geeignet ist, daß jeder Deckelrahmen an der Vorderseite eines(r) vollständig installierten und elektrisch angeschlossenen Netzschalters, Netzsteckdose oder dergleichen montiert werden kann.

2. Modulares System nach Anspruch 1, wobei der Deckelrahmen mit gegenüberliegenden Seitenabschnitten versehen ist, jeder Abschnitt wenigstens einen von dem restlichen Dekkelrahmen abtrennbaren Stab (16, 18) bildet, und/oder der Deckelrahmen mit oberen und unteren Randanteilen versehen ist, die jeweils wenigstens einen von dem restlichen Dekkelrahmen abtrennbaren Stab (16, 18) bilden.

3. Modulares System nach Anspruch 1 oder 2, wobei die Dekkelrahmenöffnung (20) quadratisch ist.

4. Modulares System nach einem oder mehreren der vorstehenden Ansprüche, wobei der Deckelrahmen mit Nuten (12, 14) versehen ist, welche die Trennungslinien zwischen den abnehmbaren Stäben (16, 18) und dem restlichen Deckelrahmen anzeigen.

5. Modulares System nach Anspruch 4, wobei die Tiefe der Nuten und die restliche Wanddicke ein Abbrechen der Stäbe (16, 18) ohne Verwendung von Werkzeugen erlaubt.

6. Modulares System nach Anspruch 4, wobei die Nuten (12, 14) an der Vorder- und/oder an der Rückseite des Deckelrahmens ausgebildet sind.

7. Modulares System nach einem oder mehreren der vorstehenden Ansprüche, wobei der Deckelrahmen quadratisch ist.

8. Modulares System nach einem oder mehreren der vorstehenden Ansprüche, wobei der Deckelrahmen und die Stäbe (16, 18) als ein einteiliges Stück geformt oder gepreßt werden.

9. Modulares System nach einem oder mehreren der vorstehenden Ansprüche, wobei die Stäbe und der restliche Teil des Deckelrahmens als getrennte Teile geformt oder gepreßt werden.

10. Modulares System nach einem oder mehreren der vorstehenden Ansprüche, wobei der die Stäbe (16, 18) enthaltende Deckelrahmen 85 mm lang ist und jeder abtrennbare Stab (16, 18) 7 mm oder 14 mm lang ist.

## Revendications

1. Système modulaire de cadre de protection (10) destiné au montage au niveau de coffrets contigus, destiné à des interrupteurs de courant de secteur et des prises de courant de secteur ou analogue, chaque cadre de protection étant sensiblement rectangulaire et dimensionné de façon à renfermer le coffret et il est muni de portions de bord extérieur en opposition formant au moins une barre (16, 18) qui peut être séparée du cadre de protection restant pour permettre à deux cadres de protection (10) d'être disposés de façon contiguë, caractérisé en ce que le cadre de protection (10) est une plaque de cache-entrée et possède une ouverture (20) appropriée à recevoir une clé d'interrupteur de telle sorte que chaque cadre de protection (10) peut être monté sur la face frontale d'un interrupteur électrique de secteur complètement installé et raccordé électriquement.

2. Système modulaire selon la revendication 1, dans lequel le cadre de protection étant muni de sections latérales opposées, chaque section formant au moins une barre (16, 18) séparable du cadre de protection restant et/ou le cadre de couvercle étant muni de portions de bord supérieur et inférieur, chacune formant au moins une barre (16, 18) séparable du cadre de protection restant.

3. Système modulaire selon la revendication 1 ou 2, dans lequel l'ouverture du cadre de protection (20) est carrée.

4. Système modulaire selon une ou plusieurs des revendications précédentes, dans lequel le cadre de protection étant muni de gorges (12, 14) indiquant les lignes de séparation entre les barres détachables (16, 18) et le cadre de protection restant.

5. Système modulaire selon la revendication 4, dans lequel la profondeur des gorges et l'épaisseur de paroi restante permettent de briser les barres (16, 18) sans utiliser d'outils.

6. Système modulaire selon la revendication 4, dans lequel les gorges (12, 14) sont formées sur la partie avant et/ou sur l'arrière du cadre de protection.

7. Système modulaire selon une ou plusieurs des revendications précédentes, dans lequel le cadre de protection est carré.

8. Système modulaire selon une ou plusieurs des revendications précédentes, dans lequel le cadre de protection et les barres (16, 18) sont moulées ou pressées sous forme de pièces intégrées.

9. Système modulaire selon une ou plusieurs des revendications précédentes, dans lequel les barres et la partie restante du cadre de protection sont moulées ou pressées sous forme de pièces séparées.

10. Système modulaire selon une ou plusieurs des revendications précédentes, dans lequel le cadre de protection comprenant les barres (16, 18) a une longueur de 85 mm et chaque barre séparable (16, 18) a une longueur de 7 ou 14 mm.
